# EUROPÄISCHE PATENTSCHRIFT

(11) **EP 0 559 056 B1**
(45) Veröffentlichungstag und Bekanntmachung des Hinweises auf die Patenterteilung: **24.04.1996**
(21) Anmeldenummer: 93102822.9
(22) Anmeldetag: 24.02.1993
(51) Int. Cl.: B01D 17/028, B01D 21/28

(54) **Profilleiste**
Profiled strip
Bande profilée

(30) Priorität: 29.02.1992 DE 9202681 U
(43) Veröffentlichungstag der Anmeldung: 08.09.1993
(73) Patentinhaber: Munters Euroform GmbH, D-52011 Aachen (DE)
(72) Erfinder: Marggraff, Martin, Dipl.-Wi.-Ing., D-5102 Würselen (DE); Schieren, Wilhelm, 5100 Aachen-Richterich (DE)
(74) Vertreter: Döring, Wolfgang, Dr. Ing.

(56) Entgegenhaltungen:
- EP-A- 0 405 169
- DE-A- 2 742 485
- DE-A- 3 426 571
- DE-A- 3 501 294

## Beschreibung

Die vorliegende Erfindung betrifft eine Profilleiste zum Einbau in wabenförmigen Abscheidepaketen für Absetzbecken, Sedimentationsanlagen u. dgl. mit den Merkmalen des Oberbegriffs des Patentanspruchs 1.

Solche Profilleisten werden entweder beim Hersteller selbst oder an der jeweiligen Einbaustelle zu Abscheidepaketen zusammengesetzt, die in entsprechende Kläreinrichtungen eingebaut werden. Bei solchen Kläreinrichtungen handelt es sich in der Regel um mit Schwerkraftsedimentation arbeitende Absetzbecken bzw. Sedimentationsanlagen. Das zu trennende Flüssigkeitsgemisch wird hierbei durch das wabenförmige Abscheidepaket geführt, wobei sich laminare Strömungsverhältnisse einstellen, die die Voraussetzung für jeden Sedimentationsvorgang sind. Durch die geschlossenen Kanäle des Wabensystems werden laminare Strömungsverhältnisse begünstigt. Um einen sicheren Schlammaustrag zu gewährleisten, sind derartige Abscheidepakete normalerweise schräg zur Horizontalen eingebaut, beispielsweise in einem Winkel von 60°.

Bevorzugte Anwendungsgebiete sind Wasseraufbereitung, Abwasserreinigung, Nachklärung in biologischen Kläranlagen, Vorklärung kommunaler Abwässer, Abwaserreinigung in der Industrie etc.

Es ist bekannt (DE-A-34 26 571), derartige Abscheidepakete in einem Wabenmuster auszubilden, wobei sechseckige Waben verbreitet sind. Diese Wabenmuster sind, wie erwähnt, aus einer Vielzahl von einzelnen Profilleisten zusammengesetzt, die entweder bereits beim Hersteller oder in situ zu den Abscheidepaketen verschweißt oder verklebt werden. Es wird dabei mittels Thermoschweißen oder Ultraschallschweißen gearbeitet. Als Materialien kommen vorwiegend geeignete Kunststoffe zum Einsatz.

Eine Profilleiste mit den Merkmalen des Oberbegriffes des Patentanspruches 1 ist aus der EP-A-0 405 169 bekannt. Diese bekannte Profilleiste besitzt zwei einen stumpfen Winkel miteinander bildende lange Basisseiten, von denen eine unter Bildung eines stumpfen Winkels in eine kurze Anschlußseite übergeht. Mit derartigen Profilleisten lassen sich Abscheidepakete von sechseckigen Waben zusammensetzen, wobei die sechseckigen Waben sich von den Rändern zur Mitte hin erweitern. Die Absetzdistanz ist hierbei je nach Position im Sechseck unterschiedlich. Ferner weist die bekannte Profilleiste am Berührungspunkt der beiden Basisseiten, der bei Schrägstellung den tiefsten Absetzpunkt bildet, eine Nut bzw. Feder auf. Durch diese Konstruktion sammeln sich hier die Feststoffe und deren Entfernen bzw. Abgleiten wird erheblich erschwert. Darüber hinaus ist die bekannte Profilleiste asymmetrisch ausgebildet und kann sich beim Abkühlen verziehen.

Der Erfindung liegt die Aufgabe zugrunde, eine Profilleiste der angegebenen Art zu schaffen, die kleinvolumig verpackt werden kann und zur Ausbildung eines stabilen Verbandes besonders einfach mit anderen Profilleisten zusammensteckbar ist.

Diese Aufgabe wird erfindungsgemäß bei einer Profilleiste der angegebenen Art durch die kennzeichnenden Merkmale des Patentanspruches 1 gelöst.

Durch die "Wannenform" der einzelnen Profilleiste läßt sich eine Vielzahl von Profilleisten zu Lager- bzw. Transportzwecken ineinanderstapeln. Eine derartige Stapelungsmöglichkeit ist bei den geschlossenen Profilen, beispielsweise Sechseckprofilen, des Standes der Technik nicht möglich. Bei der erfindungsgemäß ausgebildeten Leiste handelt es sich um ein offenes Profil, das durch eine geschickte Anordnung von Nut-Feder-Verbindungen einfach mit anderen Profilen zu einem gewünschten Abscheidepaket zusammengesteckt werden kann. Die Profile werden dabei, jeweils an den gewünschten Zeitpunkten, durch Schweißen oder Kleben aneinanderbefestigt. Durch Aneinanderstecken von mehreren identischen Profilleisten ergibt sich ein Wabenmuster, dessen einzelne Waben achteckig ausgebildet sind. Jede Wabe wird dabei von vier Profilleisten gebildet, die über die entsprechenden Nut-Feder-Verbindungen aneinandergesteckt werden. Es ergibt sich somit insgesamt ein stabiler Verband.

Beim Ineinanderstapeln zu Lager- bzw. Transportzwecken liegen die einzelnen Verbindungselemente der Nut-Feder-Verbindungen aufeinander, so daß sie sich nicht verziehen können. Die erfindungsgemäße Lösung bietet daher den weiteren Vorteil einer besonders hohen Formbeständigkeit.

Zum Aufbau einer Wabe sind insgesamt vier Nut-Feder-Verbindungsbereiche vorgesehen, mittels denen die vier eine Wabe bildenden Profilleisten aneinanderbefestigt werden. Hierzu werden die einzelnen Leisten zusammengesteckt, wobei die Federn in die Nuten eingeschoben werden. Danach erfolgt die gewünschte dauerhafte Befestigung.

Bei der vorstehend beschriebenen allgemeinen Ausführungsform weist die Profilleiste insgesamt vier Seiten auf, wobei die Anschlußseiten jeweils in einem Nut-Feder-Verbindungselement enden. Eine besonders bevorzugte Ausführungsform der Erfindung, die für einen besonders stabilen Verband sorgt, ist dadurch gekennzeichnet, daß die Anschlußseiten in vom Wannenende weg abgewinkelte und zur entfernt davon angeordneten Basisseite parallele Endseiten übergehen. Diese Endseiten unterlagern beim Zusammensetzen einen Teil einer entsprechenden Basisseite einer benachbarten Profilleiste, so daß in diesem Bereich eine Wandstärkenverdopplung eintritt, durch die die Steifigkeit des Verbandes erhöht wird. Dieser Bereich ist dabei vorzugsweise ebenfalls als Nut-Feder-Verbindungsbereich ausgebildet. Hierdurch wird ein besonders guter Verzahnungseffekt zwischen den einzelnen Profilleisten erreicht.

Was die spezielle Ausbildung der Nut-Feder-Verbindungen anbetrifft, so weisen zweckmäßigerweise die Basisseiten an ihren Außenseiten parallel zur jeweiligen Basisseite verlaufende Nuten zum Einsetzen von Federn anderer Profilleisten auf. An jeder Basisseite sind vorzugsweise zwei Nuten mit sich gegenüberliegenden Öffnungen angeordnet. In diese beiden Nuten werden zwei Stege eingeführt, die vom Endbereich und vom Anfangsbereich der Endseite einer benachbarten Profilleiste gebildet werden. Der Steg am Anfangsbereich ist dabei benachbart zu der am Ende der Anschlußseite dieser Profilleiste vorgesehenen Nut angeordnet, so daß an dieser Stelle der entsprechende Steg der benachbarten Profilleiste in die eine Nut an der Basisseite der einen Profilleiste und der diese Nut bildende Steg an der Basisseite in die entsprechende Nut an der Übergangsstelle zwischen Anschlußseite und Endseite der benachbarten Profilleiste eingreift. Dieser doppelte Eingriff fördert weiter die Festigkeit des Verbandes.

Die Nuten sind zweckmäßigerweise immer durch seitenparallele Leistenabschnitte gebildet, welche gleichzeitig als Federn zum Einsetzen in die Nuten anderer Profilleisten dienen. Hierdurch ergibt sich der vorstehend beschriebene doppelte Eingriff. Lediglich an den Enden der Endseiten ist ein einfacher Eingriff vorgesehen, da dort eine einzige Nut und eine einzige Feder vorhanden sind.

Bei einer besonders bevorzugten Ausführungsform weisen die Basisseiten zwischen den beiden Nuten und die Endseiten zwischen ihren freien Enden und den Nuten an den Übergangsstellen durch geschwächte Materialbereiche gebildete Schweißzonen auf. An diesen Stellen werden dann die zusammengesteckten Profilleisten dauerhaft miteinander verbunden, insbesondere durch Ultraschallschweißen.

Besonders gute Ergebnisse wurden mit einer Profilleiste erreicht, deren beide Basisseiten miteinander einen Winkel von 146° und deren Basisseiten mit den Anschlußseiten einen Winkel von 127° bilden. Der bevorzugte Winkel zwischen den Endseiten und den Anschlußseiten beträgt 93°.

Um den Einsatz von derartigen Profilleisten in Schräglagen zu ermöglichen, sind bei einer bevorzugten Ausführungsform deren Längsachsen schräg zu ihren Stirnflächen angeordnet. Hierbei bilden mehrere Profilleisten zusammen ein Abscheidepaket, das eine horizontal verlaufende obere und untere Stirnfläche besitzt, wobei jedoch die einzelnen Profilleisten schräg stehen. Ein bevorzugter Winkel zur Horizontalen beträgt 60°.

Die Erfindung betrifft ferner ein aus einer Vielzahl von Profilleisten der vorstehend beschriebenen Art hergestelltes wabenförmiges Abscheidepaket. Hierbei sind die einzelnen Waben achteckförmig ausgebildet, und deren acht Seiten werden durch die zwei Basis- und zwei Anschlußseiten einer ersten Profilleiste, zwei Anschlußseiten einer zweiten und dritten Profilleiste und die zwei Basisseiten einer vierten Profilleiste in Parallellage zu den ersten beiden Basisseiten gebildet. Im Gegensatz zum Stand der Technik werden dabei zum Aufbau einer einzigen Wabe immer vier Profilleisten benötigt, wobei die beiden benachbarten kurzen Seiten jeweils von den Seiten unterschiedlicher Profilleisten gebildet werden.

Dabei ist folgender Verband gegeben: In die Nuten jeweils einer Basisseite der ersten Profilleiste greifen die Stege der Endseite jeweils einer anderen Profilleiste ein, in die Nuten an den Übergangsstellen zwischen Anschlußseiten und Endseiten der ersten Profilleiste greift je ein Steg an der Basisseite der zweiten und dritten Profilleiste ein, und in die Nuten jeweils einer Basisseite der vierten Profilleiste greifen jeweils die Stege an den Endseiten der zweiten und dritten Profilleiste ein.

Die Erfindung wird nachfolgend anhand eines Ausführungsbeispiels in Verbindung mit der Zeichnung im einzelnen erläutert. Es zeigen:
- Figur 1: einen Horizontalschnitt durch eine im Verband mit anderen Profilleisten angeordnete Profilleiste; und
- Figur 2: schematisch den Aufbau eines Wabenpaketes aus Profilleisten gemäß Figur 1 im Horizontalschnitt.

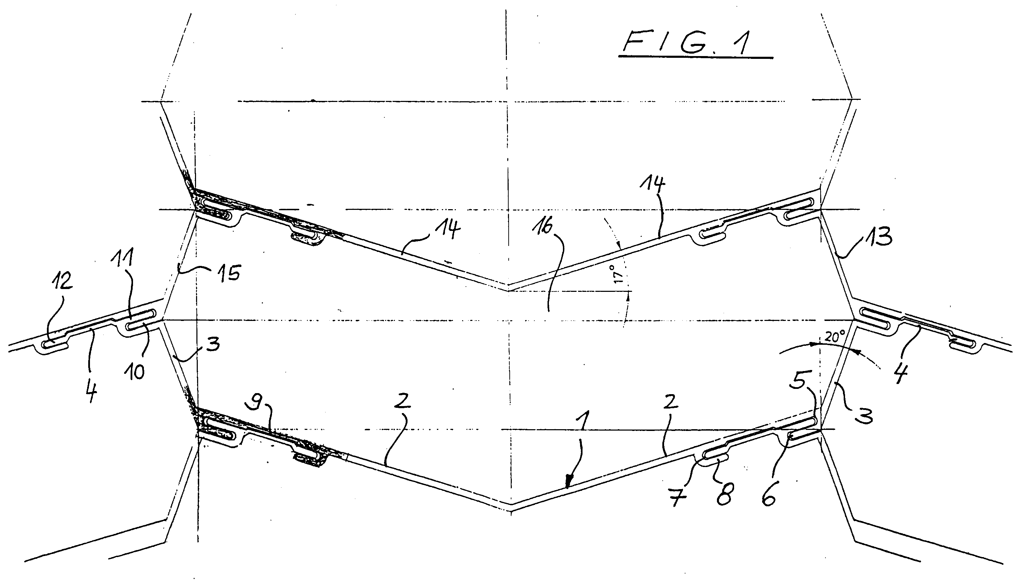

Die in Figur 1 im Horizontalschnitt dargestellte Profilleiste 1 zum Einbau in ein Abscheidepaket besitzt eine schräg zu ihren beiden Stirnseiten verlaufende Längsachse. Durch Zusammensetzen von mehreren Profilleisten dieser Art ergibt sich somit ein schräges Abscheidepaket, das beispielsweise unter einem Winkel von 60° zur Horizontalen angeordnet ist. Die beiden Stirnseiten des Paketes verlaufen dabei horizontal.

Die Profilleiste 1 besteht aus sechs Seiten und ist aus einem hierfür geeigneten Kunststoff hergestellt. Ihre Wandstärke beträgt 1,2 mm. Sie besitzt zwei Basisseiten 2, die miteinander einen Winkel von 146° bilden. Im Schnitt ist daher eine Basisseite unter einem Winkel von 17° zur Horizontalen angeordnet. Die Basisseiten 2 gehen in Anschlußseiten 3 über, die mit den Basisseiten einen Winkel von 127° bilden. Diese Anschlußseiten 3 sind wesentlich kürzer als die Basisseiten 2. Insgesamt entsteht hierdurch ein wannenartiges Gebilde. Die Anschlußseiten 3 gehen in vom Wanneninneren weg abgewinkelte und zur entfernt davon angeordneten Basisseite parallele Endseiten 4 über. Diese Endseiten sind etwas kürzer ausgebildet als die Anschlußseiten 3. Sie bilden mit den Anschlußseiten einen Winkel von 93°.

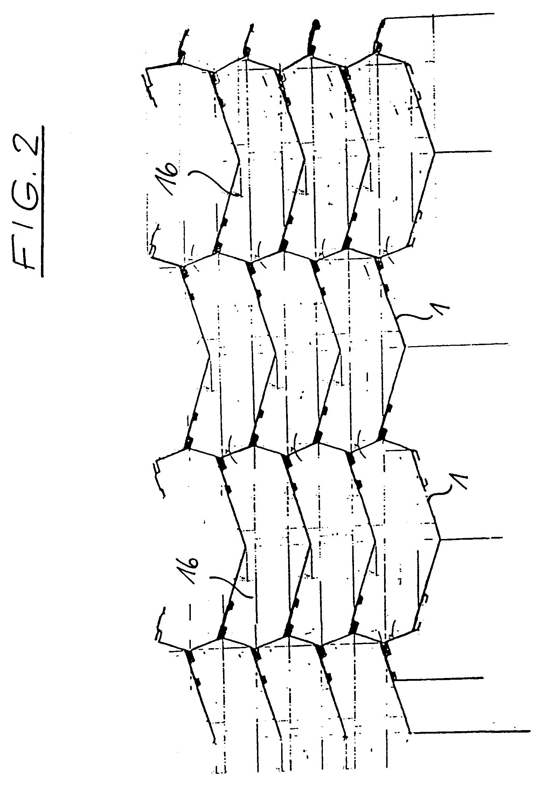

An den Basisseiten 2 und den Endseiten 4 befinden sich Nut-Feder-Verbindungselemente 5, 6, 7 und 8 sowie 10, 11 und 12, die zum Zusammensetzen mehrerer Profilleisten zu einem wabenförmigen Abscheidepaket dienen, wie dies in Figur 1 angedeutet und in Figur 2 in größerem Umfang dargestellt ist. Die Verbindungselemente an der Basisseite 2 sind in deren äußerem Bereich angeordnet und an deren Außenseite (der vom Wanneninneren wegweisenden Seite). Es handelt sich hierbei um zwei Nuten 5 und 7, die durch parallel zur Basisseite verlaufende Seitenabschnitte 6 und 8 gebildet werden, von denen der Abschnitt 6 gleichzeitig als Feder dient, die in eine Nut in einer benachbarten Profilleiste eingeführt wird. Die Öffnungen der beiden Nuten 5 und 7 zeigen gegeneinander. Zwischen den beiden Nuten besitzt die Basisseite eine reduzierte Wandstärke, um eine Ultraschallschweißzone vorzusehen. Die beiden Nuten sind in einem Abstand von Nutenende zu Nutenende von 23 mm angeordnet. An der Stelle der Nut 5 ergibt sich somit eine doppelte Verriegelung, da eine Feder der benachbarten Profilleiste in die Nut 5 eingreift, während die Feder 6 in eine entsprechende Nut dieser benachbarten Profilleiste eingreift.

Mit diesen beiden Nuten 5 und 7 an der Basisseite 2 wirken entsprechende Federn zusammen, die von den beiden Enden einer Endseite 4, 4 gebildet werden. So greift das freie Ende 12 als Feder in die Nut 7 ein, während das gegenüberliegende Ende 11 der Endseite 4 in die Nut 5 eingreift. Damit sich das freie vorstehende Ende 11 bilden kann, ist der Übergang zwischen der Anschlußseite 3 und der Endseite 4 so gestaltet, daß die Anschlußseite 3 rechtwinklig nach außen geführt und dann wiederum parallel hierzu nach innen geführt ist und in das Ende 11 der Endseite übergeht.

Jede einzelne Profilleiste 1 weist daher zum Zusammensetzen mit anderen Profilleisten zwei Nuten 5 und 7 und zwei Federn 6 und 8 (von denen die Feder 8 nicht in eine Nut eingreift) an jeder Basisseite sowie eine Nut 10 zwischen jeder Anschlußseite 3 und Endseite 4 und zwei Federn 11, 12 an jeder Endseite 4 auf. Auch zwischen diesen beiden Federn 11, 12 ist ein reduzierter Materialbereich als Ultraschallschweißzone vorgesehen, der mit dem Bereich 9 zusammenwirkt.

Wie Figur 1 zeigt, lassen sich somit vier Profilleisten so zusammensetzen, daß sich eine achteckige Wabe 16 bildet, die von den beiden Basisseiten 2 und den beiden Anschlußseiten 3 einer ersten Profilleiste 1, einer Anschlußseite 13, 15 je einer weiteren Profilleiste und den beiden Basisseiten 14 einer vierten Profilleiste gebildet wird. Die beiden jeweils aneinandergesetzten Seiten 3, 15 bzw. 3, 13 bilden miteinander einen Winkel von 140°. Die Anschlußseiten 13, 15 schließen mit den Basisseiten 14 der vierten Profilleiste einen Winkel von 93° ein.

Derartige Profilleisten können relativ einfach ineinandergeschoben und dann an den vorgesehenen Schweißzonen miteinander verschweißt werden. Dies kann sowohl im Herstellerwerk als auch an der Einbaustelle geschehen. Durch die wannenartige Gestaltung lassen sich die einzelnen Profilleisten ineinanderstapeln, so daß wenig Raum für Lager- und Transportzwecke benötigt wird.

Figur 2 zeigt den schematischen Aufbau eines aus derartigen Profilleisten zusammengesetzten Abscheidepaketes. Man erkennt, daß jeweils Reihen von achteckigen Waben 16 entstehen, die eine gemeinsame Achse in der Papierebene besitzen. Die Waben 16 benachbarter Reihen sind versetzt zueinander angeordnet, so daß sich ein stabiler Verband ergibt. Die Gesamtbreite einer Profilleiste beträgt 176 mm; der Abstand zwischen den Achsen benachbarter Reihen 127 mm. Die Höhe einer Leiste beträgt 40 mm.

## Patentansprüche

1. Profilleiste (1) zum Einbau in wabenförmigen Abscheidepaketen für Absetzbecken, Sedimentationsanlagen u. dgl., die wannenförmig ausgebildet ist und zwei einen stumpfen Winkel miteinander bildende lange Basisseiten (2) aufweist, von denen eine unter Bildung eines stumpfen Winkels in eine kurze Anschlußseite (3) übergeht, die Nut-Feder-Verbindungselemente (5, 6, 7, 8; 10, 11) an den Basisseiten (2) und am Ende der Anschlußseite (3) aufweist und die über die Nut-Feder-Verbindungselemente (5, 6, 7, 8; 10, 11) mit weiteren Profilleisten zu dem wabenförmigen Abscheidepaket zusammensetzbar ist,
dadurch gekennzeichnet, daß
die andere Basisseite (2) ebenfalls unter Bildung eines stumpfen Winkels in eine kurze Anschlußseite (3) übergeht, an deren Ende ein Nut-Feder-Verbindungselement (10, 11) vorgesehen ist, somit die Profilleiste vier Seiten aufweist, die Basisseiten (2, 2) unter Bildung eines solchen stumpfen Winkels in die Anschlußseiten (3, 3) übergehen, daß eine Vielzahl von Profilleisten (1) ineinanderstapelbar ist, die Nut-Feder-Verbindungselemente (5, 6, 7, 8) an den Basisseiten (2, 2) an deren vom Wanneninneren wegweisenden Außenseiten angeordnet sind und das zusammengesetzte Abscheidepaket von achteckigen Waben (16) und jede Wabe (16) von vier Profilleisten (1) gebildet ist.

2. Profilleiste nach Anspruch 1, dadurch gekennzeichnet, daß die Anschlußseiten (3) in vom Wanneninneren weg abgewinkelte und zur entfernt davon angeordneten Basisseite parallele Endseiten (4, 4) übergehen.

3. Profilleiste nach Anspruch 1 oder 2, dadurch gekennzeichnet, daß die Basisseiten (2) an ihren Außenseiten parallel zur jeweiligen Basisseite verlaufende Nuten (5, 7) zum Einsetzen von Federn anderer Profilleisten aufweisen.

4. Profilleiste nach Anspruch 3, dadurch gekennzeichnet, daß an jeder Basisseite (2) zwei Nuten (5, 7) mit sich gegenüberliegenden Öffnungen angeordnet sind.

5. Profilleiste nach einem der vorangehenden Ansprüche, dadurch gekennzeichnet, daß an den Übergangsstellen der Anschlußseiten (3) in die Endseiten (4, 4) parallel zur jeweiligen Endseite (4, 4) verlaufende Nuten (10) zum Einsetzen von Federn anderer Profilleisten angeordnet sind.

6. Profilleiste nach einem der vorangehenden Ansprüche, dadurch gekennzeichnet, daß die Nuten durch seitenparallele Leistenabschnitte gebildet sind, welche gleichzeitig als Federn zum Einsetzen in die Nuten anderer Profilleisten dienen.

7. Profilleiste nach einem der Ansprüche 4 bis 6, dadurch gekennzeichnet, daß die Basisseiten (2) zwischen den beiden Nuten (5, 7) und die Endseiten (4, 4) zwischen ihren freien Enden (12) und den Nuten (10) an den Übergangsstellen durch geschwächte Materialbereiche (9) gebildete Schweißzonen aufweisen.

8. Profilleiste nach einem der vorangehenden Ansprüche, dadurch gekennzeichnet, daß die beiden Basisseiten (2) miteinander einen Winkel von 146° und die Basisseiten (2) mit den Anschlußseiten (3) einen Winkel von 127° bilden.

9. Profilleiste nach einem der Ansprüche 2 bis 8, dadurch gekennzeichnet, daß die Endseiten (4, 4) mit den Anschlußseiten (3) einen Winkel von 93° bilden.

10. Profilleiste nach einem der vorangehenden Ansprüche, dadurch gekennzeichnet, daß ihre Längsachse schräg zu ihren Stirnflächen verläuft.

11. Aus einer Vielzahl von Profilleisten der Ansprüche 1 bis 10 hergestelltes wabenförmiges Abscheidepaket, dadurch gekennzeichnet, daß die einzelnen Waben (16) achteckförmig ausgebildet sind, wobei deren acht Seiten durch die zwei Basis- und zwei Anschlußseiten (2, 3) einer ersten Profilleiste, zwei Anschlußseiten (13, 15) einer zweiten und dritten Profilleiste und die zwei Basisseiten (14) einer vierten Profilleiste in Parallellage zu den ersten beiden Basisseiten (2) gebildet sind.

12. Abscheidepaket nach Anspruch 11, dadurch gekennzeichnet, daß in die Nuten (5, 7) jeweils einer Basisseite (2) der ersten Profilleiste die Federn (11, 12) der Endseite (4, 4) jeweils einer anderen Profilleiste, in die Nuten (10) an den Übergangsstellen zwischen Anschlußseiten (3) und Endseiten (4, 4) der ersten Profilleiste je ein Steg an der Basisseite der zweiten und dritten Profilleiste und in die Nuten jeweils einer Basisseite (14) der vierten Profilleiste jeweils die Stege an den Endseiten der zweiten und dritten Profilleiste eingreifen.

## Claims

1. Profiled strip (1) for the installation in honeycomb-like separator packages for sedimentation basins, sedimentation installations etc., said profiled strip having a trough-like shape and two long base sides (2) forming an obtuse angle with one another, one of said base sides, with the formation of an obtuse angle, merging into a short connection side (3), said profiled strip having groove and tongue connectors (5, 6, 7, 8; 10, 11) at the base sides (2) and at the end of the connection side (3) and adapted to be put together with additional profiled strips to the honeycomb-like separator package, characterized in that the other base side (2), with the formation of an obtuse angle, also merges into a short connection side (3) at the end of which a groove and tongue connector (10, 11) is provided, so that the profiled strip has four sides, the base sides (2, 2) merge into the connection sides (3, 3) with the formation of such an obtuse angle that a plurality of profiled strips (1) is adapted to be stacked into one another, the groove and tongue connectors (5, 6, 7, 8) are located on the base sides (2, 2) at the outer sides thereof facing away from the interior of the trough, and the assembled separator package is formed by octagonal honeycombs (16) and each honeycomb (16) is formed by four profiled strips (1).

2. The profiled strip according to claim 1, characterized in that the connection sides (3) merge into end sides (4, 4) angled away from the interior of the trough and parallel with respect to the base side located remote thereof.

3. The profiled strip according to claim 1 or 2, characterized in that the base sides (2) on their outer sides have grooves (5, 7) for the installation of tongues of other profiled strips, said grooves extending parallel with respect to the respective base side.

4. The profiled strip according to claim 3, characterized in that two grooves (5, 7) with opposite apertures are disposed at each base side (2).

5. The profiled strip according to one of the preceding claims, characterized in that grooves (10) for the installation of tongues of other profiled strips are disposed at the transition points of the connection sides (3) into the end sides (4, 4) and extend parallel with respect to the respective end side (4, 4).

6. The profiled strip according to one of the preceding claims, characterized in that the grooves are formed by side-parallel strip portions which simultaneously serve as tongues for the installation into the grooves of other profiled strips.

7. The profiled strip according to one of the claims 4 to 6, characterized in that the base sides (2) between the two grooves (5, 7) and the end sides (4, 4) between their free ends (12) and the grooves (10) have welding zones at the transition points formed by portions (9) of weakened material.

8. The profiled strip according to one of the preceding claims, characterized in that the two base sides (2) form an angle of 146° with one another and the base sides (2) form an angle of 127° with the connection sides (3).

9. The profiled strip according to one of the claims 2 to 8, characterized in that the end sides (4, 4) form an angle of 93° with the connection sides (3).

10. The profiled strip according to one of the preceding claims, characterized in that its longitudinal axis extends in an inclined manner with respect to its front faces.

11. Honeycomb-like separator package fabricated from a plurality of profiled strips according to the claims 1 to 10, characterized in that the individual honeycombs (16) are formed octagonally, wherein the eight sides thereof are formed by the two base sides and two connection sides (2, 3) of a first profiled strip, the two connection sides (13, 15) of a second and third profiled strip and the two base sides (14) of a fourth profiled strip in parallel location with respect to the first two base sides (2).

12. The separator package according to claim 11, characterized in that the tongues (11, 12) of the end side (4, 4) of a respective other profiled strip engage into the grooves (5, 7) of a respective base side (2) of the first profiled strip, a respective web at the base side of the second and third profiled strips engages into the grooves (10) at the transition points between the connection sides (3) and the end sides (4, 4) of the first profiled strip, and the respective webs at the end sides of the second and third profiled strips engage into the grooves of a respective base side (14) of the fourth profiled strip.

## Revendications

1. Languette profilée (1) pour incorporation dans des garnitures de séparation en nid d'abeille de bassins de décantation, installations de sédimentation et similaires, configurée en forme de cuvette et présentant deux longs côtés de base (2) formant l'un avec l'autre un angle obtus, et dont l'un se prolonge, sur les côtés de base (2) et à l'extrémité du côté de raccordement (3), en formant un angle obtus, en un court côté de raccordement (3) qui présente des éléments de liaison à rainure et ressort (5, 6, 7, 8; 10, 11), et qui peut être assemblée avec d'autres languettes profilées, par l'intermédiaire des éléments de liaison à rainure et ressort (5, 6, 7, 8; 10, 11) pour former la garniture de séparation en nid d'abeille, caractérisée en ce que l'autre côté de base (2) se prolonge, également en formant un angle obtus, en un court côté de raccordement (3) à l'extrémité duquel est prévu un élément de liaison à rainure et ressort (10, 11), de sorte que la languette profilée présente quatre côtés, les côtés de base (2, 2) se prolongeant en les côtés de raccordement (3, 3) en formant un angle obtus, de telle sorte qu'un grand nombre de languettes profilées (1) peuvent être empilées les unes dans les autres, les éléments de liaison à rainure et ressort (5, 6, 7, 8) étant disposés sur les côtés de base (2, 2), sur leur côté extérieur s'éloignant de l'intérieur de la cuvette, et la garniture de séparation assemblée est formée de nids d'abeilles octogonaux (16), chaque nid d'abeilles (16) étant formé par quatre languettes profilées (1).

2. Languette profilée selon la revendication 1, caractérisée en ce que les côtés de raccordement (3) se prolongent en côtés d'extrémité (4, 4) qui sont repliés de manière à s'éloigner de l'intérieur de la cuvette et qui sont parallèles au côté de base non contigu à ce côté de raccordement.

3. Languette profilée selon la revendication 1 ou 2, caractérisée en ce que les côtés de base (2) présentent sur leur côté extérieur des rainures (5, 7) s'étendant parallèlement à chaque côté de base, pour l'insertion des ressorts d'autres languettes profilées.

4. Languette profilée selon la revendication 3, caractérisée en ce que sur chaque côté de base (2) sont disposées deux rainures (5, 7) dont les ouvertures sont opposées.

5. Languette profilée selon l'une des revendications précédentes, caractérisée en ce qu'aux points où les côtés de raccordement (3) se prolongent en les côtés d'extrémité (4, 4), des rainures (10) s'étendant parallèlement à chaque côté d'extrémité (4, 4) sont disposées en vue de l'insertion de ressorts d'autres languettes profilées.

6. Languette profilée selon l'une des revendications précédentes, caractérisée en ce que les rainures sont formées par des parties de rainure à côtés parallèles, qui servent en même temps de ressorts à insérer dans la rainure d'autres languettes profilées.

7. Languette profilée selon l'une des revendications 4 à 6, caractérisée en ce qu'entre les deux rainures (5, 7) et les côtés d'extrémité (4, 4), les côtés de base (2) présentent entre leurs extrémités libres (12) et les rainures (10) des régions (9) où le matériau est de plus faible épaisseur aux points de transition.

8. Languette profilée selon l'une des revendications précédentes, caractérisée en ce que les deux côtés de base (2) forment l'un avec l'autre un angle de 146°, et les côtés de base (2) forment avec le côté de raccordement (3) un angle de 127°.

9. Languette profilée selon l'une des revendications 2 à 8, caractérisée en ce que les côtés d'extrémité (4, 4) forment avec le côté de raccordement (3) un angle de 93°.

10. Languette profilée selon l'une des revendications précédentes, caractérisée en ce que son axe longitudinal s'étend obliquement par rapport à sa surface frontale.

11. Garniture de séparation en nid d'abeille réalisée à partir d'un grand nombre de languettes profilées selon les revendications 1 à 10, caractérisée en ce que les nids d'abeilles individuels (16) sont en forme d'octogone, dont les huit côtés sont formés par deux côtés de base et deux côtés de raccordement (2, 3) d'une première languette profilée, deux côtés de raccordement (13, 15) d'une seconde et d'une troisième languette profilée et les deux côtés de base (14) d'une quatrième languette profilée, en position parallèle aux deux premiers côtés de base (2).

12. Garniture de séparation selon la revendication 11, caractérisée en ce que les ressorts (11, 12) du côté d'extrémité (4, 4) de chaque languette profilée s'engagent chaque fois dans les rainures (5, 7) d'un côté de base (2) de la première languette profilée, en ce qu'une aile située sur le côté de base de la seconde et de la troisième languette profilée s'engage dans les rainures (10) situées aux points de transition entre les côtés de raccordement (3) et les côtés d'extrémité (4, 4) de la première languette profilée, et en ce que les ailes situées sur les côtés d'extrémité de la seconde et de la troisième languette profilée s'engagent dans les rainures de chaque côté de base (14) de la quatrième languette profilée.
